(19) Europäisches Patentamt
European Patent Office
Office européen des brevets

(11) **EP 4 551 019 B1**

(12) **EUROPEAN PATENT SPECIFICATION**

(45) Date of publication and mention
of the grant of the patent:
**27.05.2026 Bulletin 2026/22**

(21) Application number: **24783371.8**

(22) Date of filing: **19.09.2024**

(51) International Patent Classification (IPC):
**A01N 43/10** (2006.01)     **A01N 43/82** (2006.01)
**A01P 13/02** (2006.01)

(52) Cooperative Patent Classification (CPC):
(C-Sets available)
**A01N 43/82; A01N 43/10; A01P 13/02**     (Cont.)

(86) International application number:
**PCT/IL2024/050937**

(87) International publication number:
**WO 2025/062395 (27.03.2025 Gazette 2025/13)**

(54) **NOVEL MIXTURES FOR CROP PROTECTION**

NEUE MISCHUNGEN ZUM PFLANZENSCHUTZ

NOUVEAUX MÉLANGES POUR LA PROTECTION DES CULTURES

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**

(30) Priority: **21.09.2023 EP 23198882**

(43) Date of publication of application:
**14.05.2025 Bulletin 2025/20**

(73) Proprietor: **Adama Agan Ltd.**
**7710201 Ashdod (IL)**

(72) Inventors:
• **SPERLING, Shani**
**8532500 Beit Kama (IL)**
• **ESCRIBANO-VANACLOCHA, Juan A.**
**28002 Chamartín Madrid (ES)**

(74) Representative: **Modiano, Gabriella Diana**
**Modiano & Partners SA**
**Steinsdorfstraße 14**
**80538 München (DE)**

(56) References cited:
**EP-A1- 3 603 395     WO-A1-02/21922**

• "The e-Pesticide Manual (Twelfth edition)
Version 2.2", 1 January 2002, BRITISH CROP
PROTECTION COUNCIL, article TOMLIN CLIVE
D: "The e-Pesticide Manual, Flufenacet (362)",
pages: 2pp, XP055381642
• .: "Reply dated 17.05.2004 to EP 01982298.0", EP
REGISTRY, 17 May 2004 (2004-05-17), pages 1 -
11, XP093120463, Retrieved from the Internet
<URL:.> [retrieved on 20240117]

(52) Cooperative Patent Classification (CPC): (Cont.)

C-Sets
**A01N 43/82, A01N 43/10**

**Description**

FIELD OF INVENTION

The present invention relates to a mixture of active ingredients comprising, dimethenamid and flufenacet, and to methods of controlling weeds comprising applying said mixtures.

BACKGROUND OF INVENTION

The vulnerability of crops to weeds makes crop protection management one of the major components of the total crop production system. Various Insects and fungi along with the undesired weeds are very harmful to crop plants and can significantly reduce crop yields and qualities. herbicides alone or in combination help minimize this damage by controlling threats to the crop. Many active ingredients either of the same class or having mixtures of different classes are commercially available for these purposes.

Combinations of herbicides or mixtures of one or more herbicides with other active ingredients are typically used to broaden spectrum of control, to minimize the doses of chemicals used, to retard the development of resistance and to reduce the cost of the treatment through additive effect. Although many combinations of one herbicide agent with one or more active ingredients have been studied, a synergistic effect is rarely attained.

Practical agricultural experience has shown that the repeated and exclusive application of an individual active ingredient in the control of a single weed leads in many cases to a selection of those weeds which have developed natural or adapted resistance against the active compound in question. Effective control of these weeds with the active compound in question is then no longer possible.

Therefore, there is a need for active ingredients that help prevent or overcome resistance. To reduce the risk of weeds becoming resistant to certain active compounds, mixtures of different active ingredients are nowadays conventionally employed for controlling weeds. By combining judiciously active compounds having different mechanisms of action, it is possible to ensure successful control over a relatively long period of time.

Active agent mixtures are described in the literature. However, the control over the weeds does not always satisfy the needs of agriculture practice. Additionally, the efficacy of the control provided by these mixtures is not always satisfactory, or it can create additional toxicological and/or environmental effects. Random pesticidal formulations and mixtures do not exert a satisfactory controlling effect in most of the cases, and therefore, there is an urgent need for the development of new pesticidal mixtures having satisfactory controlling effects with more than one active ingredient.

EP3603395 A1 (BASF SE) discloses a ternary mixture of either dimethenamid or dimethenamid-P, isoxaflutole and either imazamox, imazapic, imazaquin, showing field test in cotton and soybean fields. Said mixture is combined with a liquid or solid carrier and/or additives like dispersants and surfactants, etc.

Tomlin Clive D: "The e-Pesticide Manual, Flufenacet (362)"; In: "The e-Pesticide Manual (Twelfth edition) Version 2.2", 1 January 2002 (2002-01-01), BRITISH CROP PROTECTION COUNCIL, discloses that flufenacet is an effective pre- and post-emergence herbicide from the class of very long-chain fatty acid (VLCFA inhibitor) inhibitors which is used in agrochemical applications for the control of broad-leaved weeds for example in fields of maize, potatoes, rice, soybeans, sunflowers, tomatoes, and wheat.

WO02/21922 A1 discloses a binary mixture of flufenacet (VLCFA inhibitor) and mesotrione (HPPD inhibitor) and field test thereof against different weeds both in pre- and post-emergence.

It is an object of the present invention to provide mixtures and formulations of judiciously selected active ingredients which have improved activity against harmful weeds. It is an object of the present invention to provide mixtures and formulations that display a synergistic control of weeds.

SUMMARY OF THE INVENTION

It is an endeavor of the present invention to find mixtures that provide improved control of weeds. These improvements may come in the form of a synergistic efficacy among active ingredients. That is, allowing better control of weeds than it is possible with the individual compounds alone. Improvements can also overcome at least one of the challenges in the prior art, for example, by reducing the dosage rate or by enhancing the spectrum of activity or by combining knock-down activity with prolonged control or by facilitating resistance management.

Considering the above, it is an object of the present invention to provide mixtures of active ingredients that improve control of weeds.

It is an object of the present invention to provide a mixture comprising dimethenamid and flufenacet.

The present invention provides a combination, wherein the weight ratio between dimethenamid and flufenacet is typically from 1:20 to 20:1, for example from 1:1 to 10:1 or from 1:1 to 5:1, and the amount of each active ingredient is about 0.1-99 wt. %, about 0.1-95 wt. %, or about 0.1-90 wt. %, based on the total weight of the mixture composition.

The present invention provides a mixture comprising dimethenamid and flufenacet as mentioned above, wherein the application rates of the mixture according to the invention are from 1 g/ha to 1000 g/ha, wherein "g/ha" has its normal meaning of grams of active ingredient per hectare.

The present invention further provides a formulation comprising dimethenamid and flufenacet as mentioned above, and further comprising at least one agriculturally acceptable additive, for example, at least one selected from the group consisting of a carrier, a surfactant, a solvent and combinations thereof.

The present invention further provides the use of the mixture or of the formulation comprising dimethenamid and flufenacet for controlling weeds.

The present invention also provides a method for controlling weeds comprising contacting the weeds or their locus with an agriculturally effective amount of the mixture or the formulation according to the invention.

DETAILED DESCRIPTION OF THE PRESENT INVENTION

Definitions

Prior to setting forth the present subject matter in detail, it may be helpful to provide definitions of certain terms used herein. Unless defined otherwise, all technical and scientific terms used herein have the same meaning as is commonly understood by one of skill in the art to which this subject matter pertains.

As used herein, the term "active ingredient" includes, but is not limited to, herbicides, insecticides, and fungicides.

As used herein, the term "herbicide" refers to an active ingredient capable of controlling unwanted plants or weeds, for example when growing in the locus of the desired crop.

As used herein, the terms "control" or "controlling" are meant to include, but are not limited to, any killing, growth regulating, inhibiting or interfering with the normal life cycle of a weed.

As used herein, the term "effective" when used to describe a method for controlling, means that the method provides a good level of control of the undesired weeds without significantly interfering with the normal growth and development of the crop.

As used herein, the term "effective amount" when used in connection with an active ingredient or a combination of active ingredients refers to an amount thereof that, when ingested, contacted with or sensed, is sufficient to achieve a good level of control or activity without significantly interfering with the normal growth and significantly harming the crop.

As used herein, the term "effective amount" when used in connection with a non-active component, i.e. additive, such as a polymer or an organic carrier, refers to an amount of the additive that is sufficient to perform its function within the formulation.

As used herein, the term "agriculturally acceptable " means a substance which is known and accepted in the art for the formation of compositions for agricultural or horticultural use.

As used herein, the term "agriculturally acceptable inert additives" is defined as any substance that itself is not an active ingredient but is added to the formulation to improve its properties, such as stability, flowability, density, etc. Examples of such additives are carriers, solvents, pH modifiers (e.g. acids or bases), thickening agent, sticking agents, surfactants, antioxidation agent, anti-foaming agents and thickeners.

As used herein, the term "adjuvant" is broadly defined as any substance that itself is not an active ingredient, but which enhances or is intended to enhance the effectiveness of the pesticide with which it is used. Adjuvants may be understood to include, but are not limited to, spreading agents, penetrants, compatibility agents, and drift retardants. They are typically used to dilute ready mix formulations prior to application in the field, although some formulations include built-in adjuvants.

As used herein, the term "ready mix" or "ready mixture" means a formulation that may be applied to plants directly after dilution. The formulation comprises one or more active ingredients. The term "mixture" refers, but is not limited to, a combination in any physical form, e.g., blend, solution, alloy, or the like.

As used herein, the term "tank mix" refers to the mixture of two or more active ingredients or formulations that are mixed shortly before application. Tank mixtures can therefore be formed by mixing one or more formulations (each comprising one or more active ingredients) with water. Alternatively, as mentioned above, tank mixtures may comprise the mixture of one or more formulations (each comprising one or more active ingredients) with one or more adjuvants.

As used herein the term "plant" or "crop" includes reference to whole plants, plant organs (e.g. leaves, stems, twigs, roots, trunks, limbs, shoots, fruits etc.), plant cells, or plant seeds. This term also encompasses plant crops such as fruits. The term "plant" may also include the propagation material thereof, which may include all the generative parts of the plant such as seeds and vegetative plant material such as cuttings and tubers, which can be used for the multiplication of the plant. It may also include spores, corms, bulbs, rhizomes, sprouts basal shoots, stolons, and buds and other parts of plants, including seedlings and young plants, which are to be transplanted after germination or after emergence from soil.

As used herein, the term "locus" includes the habitat, breeding ground, plant, propagation material, soil, area, material or environment in which a pest is growing or may grow.

As used herein, the term "genetically modified plants", broadly known also as "genetically modified organism" or "GMO", includes plants the DNA of which has been modified using genetic engineering methods, such as recombinant DNA techniques. Typically, one or more genes have been integrated into the genetic material of such a plant to improve certain properties of the plant.

As used herein, the term "herbicide-resistant" or "herbicide resistant" refers to an individual plant of a crop or a weed that survives a herbicide application that would kill a normal population of the same species. Such resistance can be naturally acquired or introduced through genetic engineering methods.

As used herein, the term "herbicide-tolerant" or "herbicide tolerant" refers to crops or weeds that survive and reproduce after herbicide treatment at a normal use rate. Such tolerance can be naturally acquired or introduced through genetic engineering methods.

The term "a" or "an" as used herein includes the singular and the plural, unless specifically stated otherwise. Therefore, the terms "a," "an" or "at least one" can be used interchangeably in this application.

Throughout the application, descriptions of various embodiments use the term "comprising"; however, it will be understood by one of skill in the art, that in some specific instances, an embodiment can alternatively be described using the language "consisting essentially of" or "consisting of".

As used herein the term "ha" refers to hectare.

As used herein, the term "g" refers to gram, and "L" or "l" refers to litre.

As used herein, the term "more effective" includes, but is not limited to, increasing efficacy of the pesticidal control, prolonging protection and reducing the amount of time needed to achieve a given level of pesticidal control, prolonging the duration of protection against weeds attack after application and extending the protection period against weeds attack and/or reducing the amount of time needed to achieve a level of weeds control compared to when each pesticide at the same amount is applied alone.

As used herein, the term "surfactant" means an agriculturally acceptable material which imparts emulsifiability, stability, spreading, wetting, dispersibility or other surface-modifying properties. Examples of suitable surfactants include non-ionic, anionic, cationic and ampholytic surfactants.

For purposes of better understanding the present teachings and in no way limiting the scope of the teachings, unless indicated to the contrary, the numerical parameters set forth in the following specification and attached claims are approximations that may vary depending upon the desired properties sought to be obtained. At the very least, each numerical parameter should at least be construed in light of the number of reported significant digits and by applying ordinary rounding techniques. In this regard, use of the term "about" herein specifically includes ±10% from the indicated values in the range. In addition, the endpoints of all ranges directed to the same component or property herein are inclusive of the endpoints, are independently combinable, and include all intermediate points and ranges.

Unless otherwise specified, references to percentages of a component present in a combination are by weight (wt.) percentages of the component with respect to the total weight of the combination.

It is further understood that where a parameter range is provided, all integers within that range, and tenths thereof, are also provided by the subject matter. For example, "0.1% to 50%" includes 0.1 %, 0.2 %, 0.3 %, 0.4 % etc. up to 50 %.

When a ratio herein is to be "X:1 or higher", it is meant that the ratio is Y:1, where Y is X or greater, and when a ratio is herein to be "X:1 or lower", it is meant that the ratio is Z:1, where Z is X or less. The same logic follows for ratios that are "1:X or higher" and "1:X or lower".

Commonly available safeners which may be usefully employed, individually or in any combination found to be useful, with the inventive combinations may include but are in no way limited to Daimuron (Dymron), Cumyluron , Dimepiperate, Fenclorim, Cloquintocet, (Cloquintocet-mexyl), Fenchlorazole-ethyl, Mefenpyr (Mefenpyr-diethyl), Isoxadifen (Isoxadifenethyl), Cyprosulfamide, Dietholate, Benoxacor, BPCMS, Cyometrinil, Dichlormid, Dicyclonon, Dietholate, fenchlorazole, Flurazole, Fluxofenim, Furilazole, Jiecaowan, Jiecaoxi, Mephenate, Metcamifen, Naphthalic anhydride, or Oxabetrinil. Those skilled in the relevant field of art will immediately be aware of further safeners that may be employed without departing from the scope of the mixture of the invention disclosed herein. Combinations of safeners can be employed in the methods and mixtures disclosed herein.

Application

In an embodiment, the mixture of the present invention may be applied pre-sowing or post-sowing, pre-emergence, early post-emergence or post-emergence of the crop. The mixture may be applied via in furrow spray, foliar application, broadcast, basal application, soil application, soil incorporation or soil injection.

For example, the mixture can be applied in non-crop areas which include but are not limited to, commercial areas, residential areas, lawns, ornamental plants, shrubs, trees, parks, livestock areas, warehouses, food storage facilities, grain bins, turfgrass, pastures, grasslands, rangelands, fallow land, rights-of-way, golf courses, parks, along roadsides, power-lines, pipelines, railways, forests, well sites, and equipment yards.

The mixture of the invention can be added to a broad range of crops, for example, Sorghum, Corn, Wheat, Sunflower, Oilseed Rape, Rice, Soybean, Cotton, Chickpeas, Sugar beet, Potatoes, barley or tomato.

The plants include cultivated plants which tolerate the action of herbicides, fungicides or insecticides as a result of breeding and/or genetically engineered methods.

The weeds that can be treated with the mixture of the invention are grass weeds and dicotyledonous weed.

The weeds that can be treated with the mixture of the invention can be a Poacea, a Cyperacea a Amaranthaceae, a Malvacea, a Asteracea, a Chenopodiacea, a Solanaceae, a Euphorbiacea, a Polygonacea, a Portulacacea, a Caryophyllacea, a Brassicacea, a Violacea and a Geraniacea. For example, weeds could be Digitaria ssp, Echinochloa ssp., Setaria ssp., Eriochloa ssp., Sorghum ssp., Lolium ssp, Panicum ssp., Poa ssp., Agropyron ssp., Cyperus ssp., Amaranthus ssp., Abutilon ssp, Hibiscup sp, Ambrosia ssp, Matricaria ssp, Cirsium ssp, Xanthium ssp, Chenopodium ssp., Datura ssp., Solanum ssp., Mercurialis ssp., Fallopia ssp., Polygonum ssp, Portulaca ssp., Stellaria ssp., Thlaspi ssp, Viola ssp., and Geranium ssp.

The ratio of application of the mixture of the invention varies depending upon various conditions such as the type of formulation, weather conditions, the type of crop, the desired effect, and the type of weeds. For example, the application rates of the mixture of the invention are from 1 g/ha to 1000 g/ha, for example from 500 g/ha to 1000 g/ha or from 1 g/ha to 500 g/ha, wherein "g/ha" has its normal meaning of grams of active ingredient per hectare.

Formulations

Thus, for example, the mixture of the invention can be applied as a single "ready-for-use" form, or in a combined spray mixture composed from separate formulations of each single active ingredient, such as a "tank-mix" form. The ready-mix formulation can be obtained by combining the active ingredients in an effective amount with an agriculturally acceptable carrier, a surfactant or other application-promoting adjuvant customarily employed in formulation technology.

The mixture of the invention may comprise at least one additional component selected from the group of surfactants, solid diluents and liquid diluents. Such compositions can be formulated using agriculturally acceptable carriers, surfactants or other application-promoting adjuvants customarily employed in formulation technology and formulation techniques that are known in the art.

Examples of suitable solid carriers potentially useful in the present compositions include but are not limited to mineral earths such as silica gels, silicates, talc, kaolin, sericite, attaclay, limestone, bentonite, lime, chalk, bole, mirabilite, loess, clay, dolomite, zeolite, diatomaceous earth, calcium carbonate, calcium sulfate, magnesium sulfate, magnesium oxide, sodium carbonate and bicarbonate, and sodium sulfate; ground synthetic materials; fertilizers such as ammonium sulfate, ammonium phosphate, ammonium nitrate, ureas, and products of vegetable origin, such as cereal meal, tree bark meal, wood meal, and nutshell meal; cellulose powders; and other solid carriers.

Examples of suitable liquid carriers potentially useful in the present compositions include but are not limited to water; aromatic hydrocarbons such as alkylbenzenes and alkylnaphthalenes; alcohols such as cyclohexanol, and decanol; ethylene glycol; polypropylene glycol; dipropylene glycol; N,N-dimethylformamide; dimethylsulfoxide; dimethylacetamide; N-alkylpyrrolidones such as N-methyl-2-pyrrolidone; paraffins; various oils such as olive, castor, linseed, tung, sesame, corn, peanut, cotton-seed, soybean, rape-seed, or coconut oil; fatty acid esters; ketones such as cyclohexanone, 2-heptanone, isophorone, and 4-hydroxy-4-methyl-2-pentanone; and the like.

The present composition may be employed or prepared in any conventional form, for example, as wettable powders (WP), emulsion concentrates (EC), microemulsion concentrates (MEC), water-soluble powders (SP), water-soluble concentrates (SL), suspoemulsion (SE), oil dispersions (OD), concentrated emulsions (BW) such as oil-in-water and water-in-oil emulsions, sprayable solutions or emulsions, capsule suspensions (CS), suspension concentrates (SC), suspension concentrates, dusts (DP), oil-miscible solutions (OL), seed-dressing products, granules (GR) in the form of microgranules, spray granules, coated granules and absorption granules, granules for soil application or broadcasting, water-soluble granules (SG), water-dispersible granules (WDG), ULV formulations, microcapsules or waxes. These individual formulation types are known in the art.

Examples of suitable surfactants include, but are not limited to, non-ionic, anionic, cationic and ampholytic types such as alkoxylated fatty alcohols, ethoxylated polysorbate (e.g. tween 20), ethoxylated castor oil, lignin sulfonates, fatty acid sulfonates (e.g. lauryl sulfonate), phosphate esters such as phosphate esters of alcohol alkoxylates, phosphate esters of alkylphenol alkoxylates and phosphate esters of styrylphenol ethoxylates, condensates of sulfonated naphthalene and naphthalene derivatives with formaldehyde, condensates of naphthalene or of naphthalenesulfonic acid with phenol and formaldehyde, alkylarylsulfonates, ethoxylated alkylphenols and aryl phenols, polyalkylene glycols, sorbitol esters, alkali metal, sodium salts of lignosulphonates, tristyrylphenol ethoxylate phosphate esters, aliphatic alcohol ethoxylates, alkylphenol ethoxylates, ethylene oxide/propylene oxide block copolymers, graft copolymers and polyvinyl alcohol-vinyl acetate copolymers. Other surfactants known in the art may be used as desired.

Other ingredients, such as wetting agents, anti-foaming, adhesives, neutralizers, thickeners, binders, sequestrates, fertilizers, biocides, stabilizers, buffers or anti-freeze agents, may also be added to the present compositions in order to increase the stability, density, and viscosity of the described compositions.

Aqueous use forms can be prepared from emulsion concentrates, suspensions, pastes, wettable powders or water-dispersible granules by adding water. To prepare emulsions, pastes or oil dispersions, the components of the compositions either as such or dissolved in an oil or solvent, can be homogenized in water by means of a wetting agent, tackifier, dispersant or emulsifier. Alternatively, it is also possible to prepare concentrates comprising active ingredient, wetting agent, tackifier, dispersant or emulsifier and, if desired, a solvent or oil, which are suitable for dilution with water.

Typically, the concentration of active ingredients in the formulation is about 0.1-99 wt. %, about 0.1-95 wt. %, or about 0.1-90 wt. %, based on the total weight of the formulation. For example, the concentration of active ingredients in the formulation is about 1-70 wt. %, based on the total weight of the formulation, for example about 1-50 wt. %, or about 1-40 wt. %, or about 1-30 wt. % or about 1-20 wt. %, based on the total weight of the composition. For example, it is possible that the concentration of active ingredients in the formulation is about 1-10 wt. %, based on the total weight of the formulation. Thus, for example, the concentration of active ingredients in the formulation can be from about 0.1%, 0.5%, 1%, 1.5%, 2%, 2.5%, 3%, 3.5%, 4%, 4.5%, 5% to about 90%, 93%, 95%, 98%, 99% based on the total weight of the formulation. The remaining components in the formulation are for example the carrier and additives.

Disclosed but not claimed is a kit comprising dimethenamid and flufenacet. Such kits may comprise, in addition to the aforementioned active components, one or more additional active ingredients, either within the provided pesticidal composition or separately.

METHOD OF USE

The present invention provides a method for control of weeds by contacting the weed or their locus with an effective amount of the any one of the mixtures or the compositions disclosed herein so as to thereby control the weeds.

REPRESENTATIVE EXAMPLES

A synergistic effect exists whenever the action of an active ingredient combination is greater than the sum of the actions of the individual components. In the field of agriculture, it is often understood that the term "synergy" is as defined by Colby S. R. in an article entitled "Calculation of the synergistic and antagonistic responses of herbicide combinations" published in the journal Weeds, 1967, 15, p. 20-22. The action expected for a given combination of two active components can be calculated according to Colby as follows:

$$E = A + B - AB/100$$

in which E represents the expected effect, e.g. percentage of pest control, for the combination of the active ingredients at defined doses (for example equal to x and y respectively), A is the effect, e.g. percentage of pest control, observed for the first compound or mixture of compounds at a defined dose (equal to x), B is the effect, e.g. percentage of pest control, observed for the second compound or group of compounds at a defined dose (equal to y).

Here, efficacy or percent inhibition is determined in %. 0% means efficacy that corresponds to the Control, i.e., as if no treatment had been applied. A percent inhibition of 100% means that complete control is observed. When the percent control observed for the combination (E0) is greater than E, there is a synergistic effect. When the percent control observed for the combination (E0) is equal to E, there is an additive effect and wherein the percent control observed for the combination (E0) is lower than E, there is an antagonistic effect.

**Example 1: Pot trial with Dimethenamid-P+Flufenacet in AMARE**

Tank mixes were prepared by combining the formulation with water in order to achieve the desired concentration of each active ingredient, as outlined in Table 1. For this study, individual pots were utilized for sowing the weeds, with each pot containing the weed AMARE (Amaranthus retroflexus). Treatments were then applied to each pot at the pre-emergence stage of the weeds, ensuring consistent application timing across all treatments. Subsequently, a comprehensive assessment was conducted eight days after application (8DAA) to evaluate the efficacy of each treatment on AMARE weed species. The results obtained from this evaluation are summarized in Table 1.

Table 1: Trial treatments

| Treat # | Formulation | Flufenacet g a.i. hectare | DMTP g a.i. hectare |
|---|---|---|---|
| 1 | Flufenacet 568 SC | 78 | |
| 2 | DMT 720 EC | | 300 |

(continued)

| Treat # | Formulation | Flufenacet g a.i. hectare | DMTP g a.i. hectare |
|---|---|---|---|
| 3 | Flufenacet 568 SC+DMTP 720 EC | 78 | 300 |

We wanted to test whether mixing Flufenacet and Dimethenamid-p would produce a greater effect than the sum of each individual active ingredient. To do this, we used Colby's equation. If the observed value of the mixture was greater than the expected value, we could conclude that the two chemicals had a synergistic effect when combined.

The efficacy of Flufenacet on AMARE was 0%, while the efficacy of Dimethenamid-p on AMARE 75%. When we mixed Flufenacet and Dimethenamid-p in a tank, we observed an efficacy of 100%. The expected (E) of the mix calculated to be 75% (Calculation in Table 2).

Table 2: Colby calculation

| | 23 DAA AMARE % |
|---|---|
| A (Flufenacet) | 0 |
| B (Dimethenamid-P) | 75 |
| AB (Obs) | 100 |
| | |
| E=(A+B) -(A*B)/100 | 75 |
| R = E/E0 | 1.33 |

The results clearly demonstrate that when Flufenacet and Dimethenamid-p mixed in a tank (treatment 3, table 1), they provide synergistic control over broad leaf weeds (such as AMARE and other), as compared to using either active ingredient alone (treatments 1 or 2, table 1).

## Example 2: Pot trial with Flufenacet+Dimethenamid-p on LOLPE

Tank mixes were prepared by combining the formulation with water in order to achieve the desired concentration of each active ingredient, as outlined in Table 3. For this study, individual pots were utilized for sowing the weeds, with each pot containing one weed species such as LOLPE (Lolium perenne). Treatments were then applied to each pot at the pre-emergence stage of the weeds, ensuring consistent application timing across all treatments. Subsequently, a comprehensive assessment was conducted 14 days after application to evaluate the efficacy of each treatment on LOLPE. The results obtained from this evaluation are summarized in Table 3.

Table 3: Trial treatments

| Treat # | Formulation | Flufenacet ga.i. hectare | DMTP ga.i. hectare | 14DAA LOLPE% |
|---|---|---|---|---|
| 1 | Flufenacet 568 SC | 280 | | 0 |
| 2 | DMTP 720 EC | | 1008 | 30 |
| 3 | Flufenacet568 SC+ DMTP 720EC | 280 | 1008 | 50 |

Colby's Equation:

We wanted to test whether mixing Flufenacet and Dimethenamid-p would produce a greater effect than the sum of each individual active ingredient. To do this, we used Colby's equation. If the observed value of the mixture was greater than the expected value, we could conclude that the two chemicals had a synergistic effect when combined.

The efficacy of Flufenacet on LOLPE was 0%, while the efficacy of Dimethenamid-p on LOLPE 30%. The expected (E) of the mixture is 30% (Calculation in Table 4). When we mixed Flufenacet and Dimethenamid-p in a tank, we observed an efficacy of 50%.

Table 4: Colby calculation

|  | 14DAA LOLPE% |
|---|---|
| A (Flufenacet) | 0 |
| B (DMTP 720 EC) | 30 |
| AB (Obs) | 50 |
|  |  |
| E=(A+B) -(A*B)/100 | 30 |
| R = E/E0 | 1.666 |

The results clearly demonstrate that when Flufenacet and Dimethenamid-p are mixed in a tank (treatment 3, table 3), they provide synergistic control over grass weeds (LOLPE and other), as compared to using either active ingredient alone (treatments 1 or 2, table 3).

## Claims

1. A mixture comprising dimethenamid and flufenacet.

2. The mixture according to claim 1, wherein dimethenamid is dimethenamid-P.

3. An agrochemical formulation comprising:

   a) the mixture as defined in any of claims 1-2; and
   b) an agriculturally acceptable carrier.

4. The agrochemical formulation of claim 3, further comprising at least one surfactant, solid diluent, liquid diluent, or a combination thereof.

5. A method for controlling weeds comprising contacting the weeds or their locus with an agriculturally effective amount of the mixture as defined in any of claims 1-2 or the formulation as defined in any of claim 3 or 4.

6. Use of the mixture as defined in any of claims 1-2 for controlling weeds.

## Patentansprüche

1. Eine Mischung, die Dimethenamid und Flufenacet umfasst.

2. Die Mischung gemäß Anspruch 1, worin Dimethenamid Dimethenamid-P ist.

3. Eine agrochemische Formulierung, die Folgendes umfasst:

   a) die Mischung wie in einem der Ansprüche 1-2 definiert und
   b) einen landwirtschaftlich verträglichen Träger.

4. Die agrochemische Formulierung gemäß Anspruch 3, die weiter mindestens einen grenzflächenaktiven Stoff, ein festes Verdünnungsmittel, ein flüssiges Verdünnungsmittel oder eine Kombination davon umfasst.

5. Ein Verfahren zur Kontrolle von Unkraut, das das In-Kontakt-Bringen der Unkräuter oder ihres Orts mit einer landwirtschaftlich wirksamen Menge der Mischung wie in einem der Ansprüche 1-2 definiert oder der Formulierung wie in einem der Ansprüche 3 oder 4 definiert umfasst.

6. Verwendung der Mischung wie in einem der Ansprüche 1-2 definiert zur Kontrolle von Unkräutern.

**Revendications**

1. Mélange comprenant du diméthénamide et du flufénacet.

2. Mélange selon la revendication 1, où le diméthénamide est du diméthénamide-P.

3. Formulation agrochimique comprenant :

   a) le mélange tel que défini dans l'une quelconque des revendications 1 à 2 ; et
   b) un support acceptable en agriculture.

4. La formulation agrochimique selon la revendication 3, comprenant en outre au moins un tensioactif, un diluant solide, un diluant liquide ou une combinaison de ceux-ci.

5. Procédé pour lutter contre les mauvaises herbes, comprenant la mise en contact des mauvaises herbes ou de leur emplacement avec une quantité agricole efficace du mélange tel que défini dans l'une quelconque des revendications 1 à 2 ou de la formulation telle que définie dans l'une quelconque des revendications 3 ou 4.

6. Utilisation du mélange tel que défini dans l'une quelconque des revendications 1 à 2 pour lutter contre les mauvaises herbes.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 3603395 A1

- WO 0221922 A1

**Non-patent literature cited in the description**

- The e-Pesticide Manual, Flufenacet (362). **TOMLIN CLIVE D**. The e-Pesticide Manual (Twelfth edition) Version 2.2. BRITISH CROP PROTECTION COUNCIL, 01 January 2002

- **COLBY S. R.** Calculation of the synergistic and antagonistic responses of herbicide combinations. *the journal Weeds*, 1967, vol. 15, 20-22